# EUROPÄISCHE PATENTSCHRIFT

(11) **EP 1 670 667 B1**
(45) Veröffentlichungstag und Bekanntmachung des Hinweises auf die Patenterteilung: **30.06.2010**
(21) Anmeldenummer: 04714743.4
(22) Anmeldetag: 26.02.2004
(51) Int. Cl.: B60S 9/08

(54) **HÖHENVERSTELLBARE STÜTZE FÜR SATTELAUFLIEGER ODER DERGLEICHEN**
HEIGHT-ADJUSTABLE SUPPORT FOR SEMITRAILERS OR THE LIKE
SUPPORT REGLABLE EN HAUTEUR POUR SEMI-REMORQUE OU SYSTEME SIMILAIRE

(30) Priorität: 12.05.2003 DE 20307381 U
(43) Veröffentlichungstag der Anmeldung: 21.06.2006
(73) Patentinhaber: SAF-HOLLAND Verkehrstechnik GmbH, 78224 Singen-Hohentwiel (DE)
(72) Erfinder: RIEDL, Reinhold, 63897 Miltenberg (DE)
(74) Vertreter: Bauer, Clemens
(86) Internationale Anmeldenummer: PCT/EP2004/001890
(87) Internationale Veröffentlichungsnummer: WO 2004/098965

(56) Entgegenhaltungen:
- EP-A- 0 529 544
- EP-A- 1 104 369
- DE-A- 19 616 704
- FR-A- 1 095 463
- US-A1- 2003 006 599

## Beschreibung

Die Erfindung bezieht sich auf eine höhenverstellbare Stütze für Sattelauflieger oder dergleichen gemäß dem Oberbegriff des Anspruchs 1.

Derartige Stützen sind, in meist paarweiser Anordnung, am vorderen Bereich des Sattelaufliegers angeordnet.

Ein gattungsgemäßes Stützenpaar ist aus der EP 1 104 369 B1 bekannt. Eine solche so genannte Vorrichtung zum Abstützen des Aufliegers eines Sattelschleppers weist ein zweistufiges Zahnradschaltgetriebe auf, das einen Schnellgang und einen Lastgang der Stützen zu deren Betätigen über eine nachfolgende Kegelradstufe ohne bzw. unter Last, d. h. zum Heben aufweist. Neben der Ausgestaltung der Stütze für den Handbetrieb wird darin auch eine Ausführung mit Motorantrieb vorgeschlagen, bei der jedoch keine Alternativmöglichkeit zum manuellen Betreiben besteht. Diese Vorrichtung ist daher nur für den herkömmlichen manuellen Betrieb oder, in umgestalteter Art, nur für den motorischen Betrieb geeignet. Sie deckt nicht alle neuzeitlichen Anforderungen ab, worauf nachfolgend eingegangen wird.

In der dem Oberbegriff entsprechenden DE 196 16 704 C2 wird eine Antriebsvorrichtung für die Kombination mit manuell antreibbaren sogenannten Sattelstützen beschrieben. Dabei wird eine Einheit fallweise an ein, notwendiger Weise, bereits vorhandenes zweistufiges Zahnradschaltgetriebe mit nachfolgender Kegelradstufe, wobei sich das Zahnradschaltgetriebe bereits an der Stütze befindet, zusätzlich angebaut. Die Zusatzeinheit besteht aus einem Antriebsgehäuse mit weiterer Zahnradstufe und angeflanschtem Antriebsaggregat. Das zweistufige Zahnradschaltgetriebe verliert nach dieser Umrüstung seine Schaltfunktion. Außerdem wird dadurch, ungünstiger Weise, ein manuelles Antreiben der Stütze ausgeschlossen. Ein Handbetrieb ist erst wieder möglich, wenn die beschriebene Zusatzeinheit wieder demontiert und die Antriebswelle mittels Handkurbel zurückgerüstet ist. Derartige Umrüstaktivitäten sind dem Fahrer nicht zumutbar. Neben der ungünstigen, aufwendigen und sperrigen Ausführung dieser Zusatzeinheit und der, ohne Ab- /Umbaumaßnahmen, ebenfalls nicht vorhandenen Alternative eines Kraftbetriebs sowie eines Handbetriebs, erfüllt auch diese Konzeption nicht alle neuzeitlichen Anforderungen.

Die heutigen Sattelschlepper mit luftgefederten Hinterachsen sind in der Lage, über die Druckluftfederbälge, ihr Heck mit der darauf befindlichen Sattelkupplung bezüglich der Sattelhöhe zu regulieren und erforderlichen falls auch den Vorderbereich eines Sattelaufliegers anzuheben. Die Sattelaufliegerstützen werden unbelastet bis zum Boden des Abstellortes ausgefahren bevor der Sattelschlepper abgekoppelt und weggefahren werden kann. Zum Aufsatteln kann derselbe oder ein mit gleichartiger Luftfederung ausgestatteter Sattelschlepper in umgekehrter Weise, nach eventuell erforderlicher Angleichung seiner Sattelhöhe mit dem Heck, unter den abgestellten Sattelauflieger fahren und angekoppelt werden. Grundsätzlich ist heute daher bei dieser Federungs- /Hubtechnik zum Aufsatteln kein Angleichen der Bodenfreiheit des Frontbereichs des Sattelaufliegers an die Sattelhöhe des Sattelschleppers mehr erforderlich und somit kein Hubvorgang der Stützen notwendig. Das gilt im besonderen, wenn innerhalb so genannter geschlossener Fuhrparks ausschließlich artgleiche Sattelschlepper bzw. höhenmäßig darauf abgestimmte Sattelauflieger vorhanden sind. In einer Reihe von Grenzfällen jedoch, z.B. beim Einsatz von Sattelschleppern mit Blattfederungen und somit quasi fixer Sattelhöhe, muss der Sattelauflieger gegebenenfalls über die Stützen, auch unter Last, auf die Sattelhöhe des Sattelschleppers zu bringen sein. Im Trend zur Zeitersparnis und der Bedienungserleichterung bei zum Einsatz kommenden Kraftantrieben an Stützen für Sattelauflieger muss daher eine Möglichkeit zur Handantriebsmöglichkeit, sowohl aufgrund der geschilderten eventuellen Notwendigkeit eines Höhenangleichs, als auch eines möglichen Defekts am Kraftantrieb, bestehen. Nur so kann bei heutiger Transportlogistik (z.B. just in time) das Ausfallrisiko von Sattelaufliegern vermieden werden.

Es ist Aufgabe der vorliegenden Erfindung, eine höhenverstellbare Stütze für Sattelauflieger oder dergleichen vorzusehen, welche ein einfaches Getriebe aufweist und somit prozesssicher und kostengünstig gestaltet ist.

Diese Aufgabe wird durch eine höhenverstellbare Stütze für Sattelauflieger oder dergleichen mit den Merkmalen des Anspruchs 1 gelöst. Bevorzugte Ausführungsformen ergeben sich aus den abhängigen Ansprüchen.

Erfindungsgemäß ist eine höhenverstellbare Stütze für Sattelauflieger oder dergleichen vorgesehen, umfassend ein ortsfest angebrachtes Stützenaußenrohr, ein in dem Stützenaußenrohr längs-verschiebbar angeordnetes Stützeninnenrohr, und ein in der Stütze gelagerter Spindeltrieb, der über eine Kegelradstufe antreibbar ist, wobei die Kegelradstufe eine Getriebeausgangswelle aufweist, auf welcher ein drehfestes Zahnrad sitzt, und wobei das Zahnrad alternativ von einem Motorantriebsritzel einer Motorantriebswelle oder von einem Handantriebsritzel einer separaten Antriebswelle antreibbar ist. Vorteilhafterweise wird eine Stütze für Sattelauflieger geschaffen, die durch Umschaltung motorisch oder manuell betreibbar ist und deren Getriebeaufwand gering ist.

Der entscheidende Vorteil der erfindungsgemäßen Stütze liegt darin, dass anstatt eines zweistufigen Zahnradschaltgetriebes nur ein Zahnrad vorhanden ist, das alternativ von einem motorangetriebenen Ritzel, nachfolgend Motorantriebsritzel genannt, oder einem Ritzel, das manuell über eine Handkurbel angetrieben wird, nachfolgend Handantriebsritzel genannt, antreibbar ist.

Aus der Transportstellung, d. h. der verkürzten Länge der Stütze kann diese, zum Absatteln des Sattelaufliegers, vor zugsweise im Motorbetrieb in die Arbeitsstellung, d.h. bis auf den Boden des Abstellplatzes ausgefahren werden. Der motorische Kraftfluss erfolgt dabei über besagtes Motorantriebsritzel sowie Zahnrad und über eine nachfolgende Kegelradstufe auf den Spindeltrieb, im lastfreien Schnellgang. Im Reversierbetrieb kann auf diese Weise beim Aufsatteln, wenn der Sattelschlepper die Last aufgenommen hat, auch vorteilhaft die Stütze wieder im motorischen Schnellgang eingefahren, d. h. in ihre Transportstellung gebracht werden. Während des Motorbetriebs ist das Handantriebsritzel für den Handbetrieb außer Eingriff.

Wenn es, in den geschilderten Grenzfällen, notwendig ist mittels der Stützen den Sattelauflieger an die Sattelhöhe des Sattelaufliegers anzugleichen, kann einfach das Handantriebsritzel zum Eingriff gebracht werden und unter Last der Hub- bzw. Absenkvorgang manuell erfolgen. Außerdem ist der Handbetrieb auch im Störfall des Kraftantriebs zu benutzen.

Zweckmäßigerweise ist die Motorantriebswelle und die Handantriebswelle über der Getriebeausgangswelle angeordnet. Das erübrigt einen Eingriff in den Spindellagerbereich und erleichtert die Montage.

Es ist vorteilhaft, wenn die Motorantriebswelle als auch die Handantriebswelle, außer im Stützenaußenrohr auch im inneren der Stütze, unmittelbar neben dem jeweiligen Ritzel gelagert sind. Dazu wird vor-geschlagen einen, im Stützenaußenrohr befestigten, für die Lagerung beider Wellen genutzten Lagerträger vorzusehen.

Vorteilhafterweise ist die Handantriebswelle, beim Eingriff des Handantriebsritzels, im freien Endbereich zusätzlich zu lagern, was in der Rückwand des Stützenaußenrohres und der Anschraubplatte erfolgen kann.

Nach einem weiteren Gedanken ist es zweckmäßig in der Lagerung der Handantriebswelle innerhalb des Stützenaußenrohrs eine Axialarretierung der Handantriebswelle jeweils in der freigeschalteten und der Eingriffstellung des Handantriebsritzels vorzusehen. Dazu kann eine im Lagerträger sitzende Arretierungs-/Lagerbuchse dienen, in die in der Handantriebswelle befindliche federbelastete Kugeln, einrasten.

Zur Absicherung, dass der Handantrieb freigeschaltet ist bevor der Motor anlaufen kann, bzw. dass der Motor nicht erst einschaltbar ist, wenn das Handantriebsritzel außer Eingriff ist, wird ein Endschalter vorgeschlagen, der so angeordnet ist, dass er über einen Schalt-/Anschlagring auf der Handantriebswelle die Freischaltung des Handantriebsritzels überwacht.

Bei einer anderen Ausführungsform kann die Handantriebswelle unverschiebbar im Stützenaußenrohr und der Anschraubplatte gelagert sein, wobei das Handantriebsritzel permanent in Eingriff bleibt. Dabei weist ein vorn überstehender Zapfen der Handantriebswelle vorzugsweise ein Vierkant auf, auf den für den manuellen Betrieb eine Handkurbel aufsteckbar ist.

Wie vorher schon erwähnt, gehen vorteilhafte Ausgestaltungen der Erfindung aus den Unteransprüchen hervor.

Die Erfindung wird anschließend anhand der Zeichnungen erläutert. Es zeigen:
- Fig. 1: eine Frontansicht der erfindungsgemäßen Stütze,
- Fig. 2: eine Seitenansicht der in Fig.1 gezeigten Stütze,
- Fig. 3: einen Längsschnitt der Stütze entlang der Linie A- A in Fig.1,
- Fig. 4: einen Längsschnitt der Stütze entlang der Linie B- B in Fig.3,
- Fig. 5: einen Querschnitt der Stütze entlang der Linie C-C in Fig.3 im Motorbetrieb und
- Fig: 6: einen Querschnitt der Stütze entlang der Linie C-C in Fig.3 im Handbetrieb.

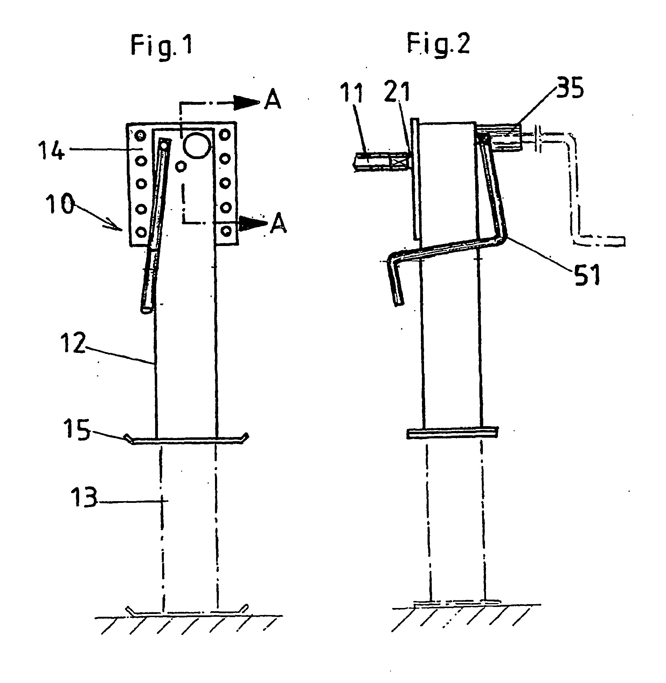

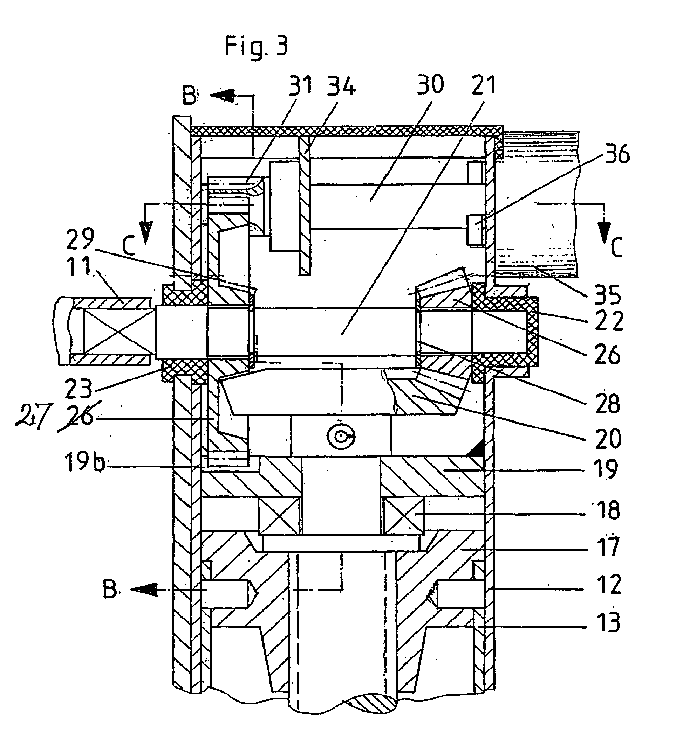

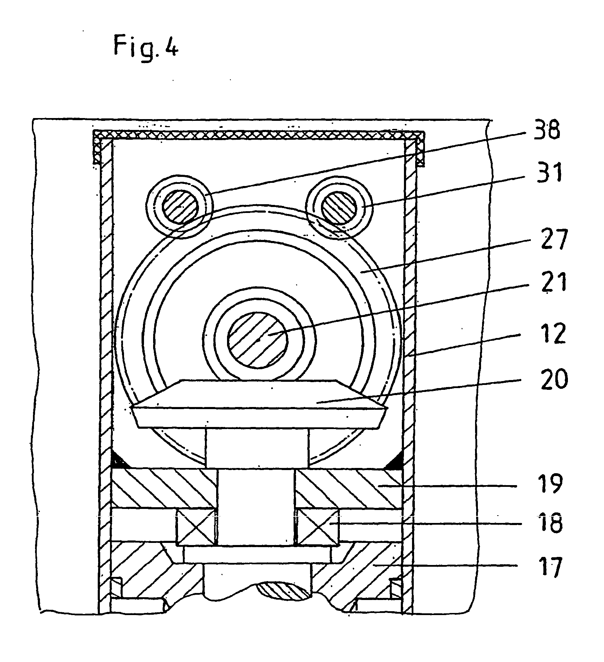

Die in Fig. 1 bis 6 gezeigte Stütze 10 wird paarweise am Chassis eines Sattelaufliegers in dessen vorderen Bereich befestigt und ist in Transportstellung eingefahren, d. h. in verkürztem Zustand. Bevor der Sattelauflieger vom Sattelschlepper abgekuppelt wird, werden die Stützen 10 ausgefahren.

Da die Stützen 10 eines jeden Paares gleich sind bzw. weil die meistens von einer ersten Stütze 10 aus über eine Verbindungswelle 11 mitangetriebene zweite sich hauptsächlich nur durch ein einfacheres Getriebe, mit lediglich einer Kegelradstufe, von der ersten unterscheidet, genügt es eine antriebseitige Stütze 10 zu beschreiben.

Die Stütze 10 weist einen Stützenaußenrohr 12 und ein darin längsverschiebbar gelagertes Innenrohr 13 auf. Das Stützenaußenrohr 12 und das Stützeninnenrohr 13 besitzen vorzugsweise einen quadratischen Querschnitt. Die Stütze 10 wird mit einer am Stützenaußenrohr 12 sitzenden Anschraubplatte 14 am Sattelauflieger befestigt. Am unteren Ende des Stützenaußenrohrs 12 ist ein Fuß 15 zur Abstützung am Boden befestigt. Die Stütze 10 weist eine Spindel 16 mit einer Mutter 17 auf. Auf der Spindelschulter sitzt ein Axiallager 18, das sich an einer Lagerplatte 19 abstützt. Die Lagerplatte 19 ist in das Stützenaußenrohr 12 eingeschweißt. Die Lagerplatte 19 besitzt zur Radiallagerung der Spindel 16 eine durchgehende Lagerbohrung 19a und an einer Seite eine mittensymmetrische Vertiefung 19b. Über der Lagerplatte 19 befindet sich auf einem Zapfen der Spindel 16 ein mit diesem verstiftetes durchmessergroßes Kegelrad 20.

Im Zentrum der Stütze 10 und oberhalb des Kegelrades 20 ist eine Getriebeausgangswelle 21 vorhanden, die in den Rohrwänden des Stützenaußenrohrs 12, auf der einen Seite in einer außen geschlossenen Bundbuchse 22 und auf der anderen Seite, außen überstehend, in einer in Buchse 23 gelagert ist. Auf der Getriebeausgangswelle 21 sind mittels Vielkeilverzahnungen 24, 25 ein durchmesserkleines Kegelrad 26 und gegenüberliegend ein Zahnrad 27 drehfest befestigt und mit Axialsicherungsringen 28, 29 fixiert.

Oberhalb der Getriebeausgangswelle 21, parallel dazu angeordnet und seitlich verlagert befindet sich eine Motorantriebswelle 30 mit einem Motorantriebsritzel 31, das in das Zahnrad 27 eingreift. Die Motorantriebswelle 30 ist mittels einer Bundbuchse 32 in der Anschraubplatte 14 sowie der Wand des Stützenaußenrohrs 12 und in der Stütze 10 unmittelbar neben dem Motorantriebsritzel 31 in einer Buchse 33, die in einem Lagerträger 34 sitzt abgelagert. Das andere Ende der Motorantriebswelle 30 sitzt auf dem Zapfen eines Motors 35, der außen am Stützenaußenrohr 12 sitzt und mit Schrauben 36 befestigt ist.

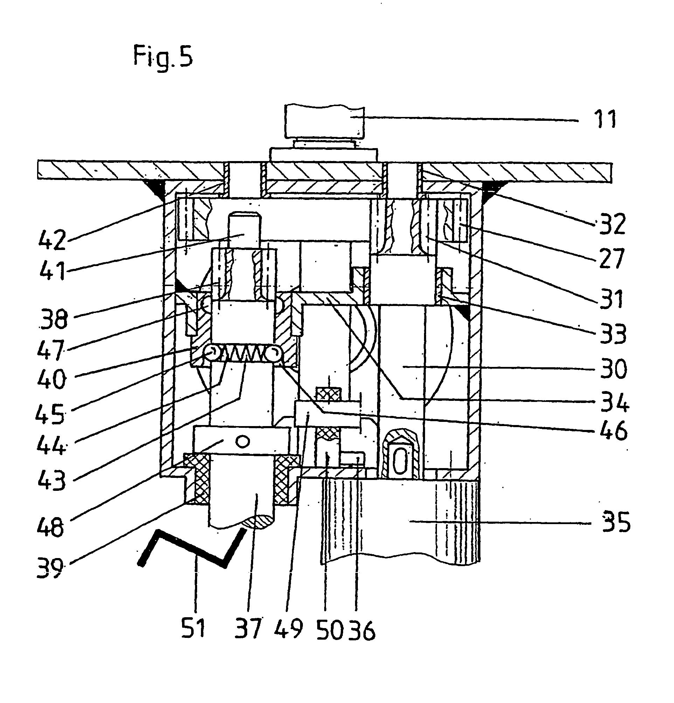

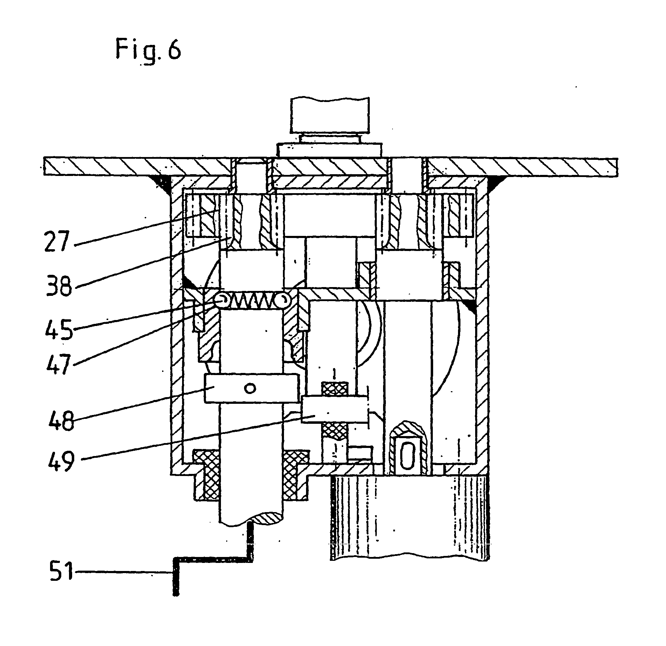

Auf gleicher Höhe wie die Motorantriebswelle 30 befindet sich seitlich versetzt und parallel zu dieser angeordnet eine Handantriebswelle 37 mit einem Handantriebsritzel 38. Die Handantriebswelle 37 kann axial verschoben werden, so dass das Handantriebsritzel 38 wahlweise freigeschaltet oder im Eingriff mit dem Zahnrad 27 sein kann - s. Fig. 5 und 6. Die Lagerung der auf der Vorderseite der Stütze 10 über-stehenden Handantriebswelle 37 erfolgt dort in einer Bundbuchse 39, die sich in der Wand des Stützenaußenrohres 12 befindet. Innerhalb der Stütze 10 lagert die Handantriebswelle 37 in einer Arretierungs-/Lagerbuchse 40, welche im Lagerträger 34 sitzt. Wird beim Verschieben der Handantriebswelle 37 das Handantriebsritzel 38 in Eingriff mit dem Zahnrad 27 gebracht, taucht ein Lagerzapfen 41 an der Handantriebswelle 37 in eine Bundbuchse 42 ein, wodurch während des Handbetriebs der Stütze 10 eine zusätzliche Lagerung am Ritzelbereich der Handantriebswelle 37 erfolgt.

In die Handantriebswelle 37 befindet sich eine Querbohrung 43, in die eine Druckfeder 44 und zwei Kugeln 45 eingebaut sind. Innerhalb der Arretierungs-/Lagerbuchse 40 sind zwei runde Einstiche 46,47 vorhanden, welche um den Verschiebeweg der Handantriebswelle 37, der etwas mehr als die Breite des Handantriebsritzels 38 entspricht, beabstandet sind. Wenn durch Verschieben der Handantriebswelle 37 die Freischaltung des Handantriebsritzels 38 oder dessen Eingriff mit dem Zahnrad 27 erreicht ist, rasten die Kugeln 45 in die Einstiche 46,47 ein wodurch die eine axial Arretierung der Handantriebswelle 37 erfolgt.

Auf der Handantriebswelle 37 sitzt ein verstifteter Schalt-/Anschlagring 48. Der Schalt-/Anschlagring 48 begrenzt einerseits durch sein Anschlagen an die Bundbuchse 39 den Freischaltweg des Handantriebsritzels 38 und bewirkt andererseits das Ansprechen eines Endschalters 49, der mit einem Halter 50 im Stützenaußenrohr 12 befestigt ist. Erst wenn in der freigeschalteten Stellung des Handantriebsritzels 38 - s. Fig. 5 - sich der Schalt-/Anschlagring 48 neben der schaltungsaktiven Stirnseite des Endschalters 49 befindet kann steuerungsmäßig der Motor 35 anlaufen.

Am überstehenden Bereich der Handantriebswelle 37 ist eine abklappbare Handkurbel 51 angebracht.

### Bezugszeichenliste

- **10**: Stütze
- **11**: Verbindungswelle
- **12**: Stützenaußenrohr
- **13**: Stützeninnenrohr
- **14**: Anschraubplatte
- **15**: Fuß
- **16**: Spindel
- **17**: Mutter
- **18**: Axiallager
- **19**: Lagerplatte
- **19a**: Lagerbohrung
- **19b**: Vertiefung
- **20**: Kegelrad
- **21**: Getriebeausgangs- welle
- **22**: Bundbuchse
- **23**: Buchse
- **24**: Vielkeilverzahnung
- **25**: Vielkeilverzahnung
- **26**: Kegelrad
- **27**: Zahnrad
- **28**: Axialsicherungsring
- **29**: Axialsicherungsring
- **30**: Motorantriebswelle
- **31**: Motorantriebsritzel
- **32**: Bundbuchse
- **33**: Buchse
- **34**: Lagerträger
- **35**: Motor
- **36**: Schraube
- **37**: Handantriebswelle
- **38**: Handantriebsritzel
- **39**: Bundbuchse
- **40**: Arretierungs- /Lagerbuchse
- **41**: Lagerzapfen
- **42**: Bundbuchse
- **43**: Querbohrung
- **44**: Druckfeder
- **45**: Kugel
- **46**: Arretiernut
- **47**: Arretiernut
- **48**: Schalt- /Anschlagring
- **49**: Endschalter
- **50**: Halter
- **51**: Handkurbel

## Patentansprüche

1. Höhenverstellbare Stütze für Sattelauflieger oder dergleichen, umfassend ein ortsfest angebrachtes Stützenaußenrohr (12),
ein in dem Stützenaußenrohr (12) längs-verschiebbar angeordnetes Stützeninnenrohr (13), und
ein in der Stütze gelagerter Spindeltrieb, der über eine Kegelradstufe (20, 26) antreibbar ist,
wobei die Kegelradstufe eine Getriebeausgangswelle (21) aufweist, auf welcher ein drehfestes Zahnrad (27) sitzt, **dadurch gekennzeichet, daß** das Zahnrad (27) alternativ von einem Motorantriebsritzel (31) einer Motorantriebswelle (30) oder von einem Handantriebsritzel (38) einer separaten Antriebswelle (37) antreibbar ist.

2. Stütze nach Anspruch 1 **dadurch gekennzeichnet, dass** das Zahnrad (27) im Stützenaußenrohr (12) auf der entgegengesetzten Seite eines auf der Getriebeausgangswelle (21) befestigten Kegelrads (26) der Kegelradstufe sitzt.

3. Stütze nach einem der vorhergehenden Ansprüche **dadurch gekennzeichnet, dass** die Motorantriebswelle (30) und die Handantriebswelle (37) oberhalb der Getriebeausgangswelle (21) angeordnet sind.

4. Stütze nach Anspruch 1 oder 2 **dadurch gekennzeichnet, dass** die Motorantriebswelle (30) oder die Handantriebswelle (37) oberhalb der Getriebeausgangswelle (21) angeordnet und die Handantriebswelle (37) oder die Motorantriebswelle (30) sich unterhalb der Getriebeausgangswelle (21) befindet.

5. Stütze nach einem der vorhergehenden Ansprüche **dadurch gekennzeichnet, dass** die Motorantriebswelle (30) und/oder die Handantriebswelle (37) im Inneren des Stützenaußenrohres (12) abgelagert sind.

6. Stütze nach Anspruch 5, **dadurch gekennzeichnet, dass** die Lagerung der Motorantriebswelle (30) und der Handantriebswelle (37) in einem gemeinsamen Lagerträger (34), der im Stützenaußenrohr (12) befestigt ist, erfolgt.

7. Stütze nach Anspruch 5 oder 6 **dadurch gekennzeichnet, dass** die Lagersitze der Motorantriebswelle (30) und der Handantriebswelle (37), im inneren Bereich des Stützenaußenrohres (12) durchmessermäßig größer als die Kopfkreisdurchmesser des Motorantriebsritzels (31) und des Handantriebsritzels (38) sind.

8. Stütze nach einem der Ansprüche 5 bis 7 **dadurch gekennzeichnet, dass** das Motorantriebsritzel (31) und/oder das Handantriebsritzel (38) einstückig mit dem jeweils anschließenden Lagerbereich bzw. Bereichen sind und die Reststücke der Motorantriebswelle (30) bzw. der Handantriebswelle (37) formschlüssig jeweilig damit verbunden sind.

9. Stütze nach einem der vorhergehenden Ansprüche **dadurch gekennzeichnet, dass** die Handantriebswelle (37) im Stirnbereich einen Lagerzapfen (41) aufweist, der, wenn das Handantriebsritzel (42) im Eingriff mit dem Zahnrad (27) ist zur Lagerung dient.

10. Stütze nach einem der vorhergehenden Ansprüche **dadurch gekennzeichnet, dass** ein Endschalter (49) vorhanden ist, mit dem über den Schalt- /Anschlagring (48) die Freischaltung des Handantriebsritzels (38) vor dem Anlaufen des Motors (35) überwacht wird.

11. Stütze nach einem der vorhergehenden Ansprüche **dadurch gekennzeichnet, dass** die Handantriebswelle (37) auf der Vorderseite der Stütze (10) im Stützenaußenrohr (12) und auf der Rückseite im Stützenaußenrohr (12) sowie der Anschraubplatte (14) unverschiebbar gelagert ist und das Handantriebsritzel (38) in permanentem Eingriff mit dem Zahnrad (27) steht.

## Claims

1. A height-adjustable support for semitrailers or the like, comprising a stationarily mounted outer support tube (12),
an inner support tube (13) disposed in a longitudinally displaceable manner in the outer support tube (12), and
a spindle drive which is disposed inside the support and can be driven by a bevel gear stage (20, 26),
wherein said bevel gear stage has a gearing output shaft (21) on which is seated, in a torque-proof manner, a gear wheel (27), **characterized in that** the gear wheel (27) can alternatively be driven by a motor drive pinion (31) of a motor drive shaft (30) or by a hand-operated drive pinion (38) of a separate drive shaft (37).

2. A support according to claim 1, **characterized in that** the gear wheel (27) inside the outer support tube (12) is seated on the opposing side of a bevel gear (26), fixed on the gearing output shaft (21), of the bevel gear stage.

3. A support according to any one of the preceding claims, **characterized in that** the motor drive shaft (30) and the hand-operated drive shaft (37) are disposed above the gearing output shaft (21).

4. A support according to claim 1 or 2, **characterized in that** the motor drive shaft (30) or the hand-operated drive shaft (37) is disposed above the gearing output shaft (21), and the hand-operated drive shaft (37) or the motor drive shaft (30) is located below the gearing output shaft (21).

5. A support according to any one of the preceding claims, **characterized in that** the motor drive shaft (30) and/or the hand-operated drive shaft (37) are mounted in the outer support tube (12).

6. A support according to claim 5, **characterized in that** the motor drive shaft (30) and the hand-operated drive shaft (37) are mounted in a common bearing carrier (34) which is fixedly arranged in the outer support tube (12).

7. A support according to claim 5 or 6, **characterized in that** the bearing seats of the motor drive shaft (30) and the hand-operated drive shaft (37), in the inner region of the outer support tube (12), have a larger diameter than the tip/outside diameter of the motor drive pinion (31) and the hand-operated drive pinion (38).

8. A support according to any one of claims 5 to 7, **characterized in that** the motor drive pinion (31) and/or the hand-operated drive pinion (38) are integral with the respectively adjacent bearing area or areas, and that the remaining parts of the motor drive shaft (30) and accordingly the hand-operated drive shaft (37) are each connected thereto in a positive-locking manner.

9. A support according to any one of the preceding claims, **characterized in that** the hand-operated drive shaft (37) in the front area is provided with a bearing pin (41) which serves as a bearing when the hand-operated drive pinion (42) engages with the gear wheel (27).

10. A support according to any one of the preceding claims, **characterized in that** an end switch (49) is provided by means of which, via the shift/stop ring (48), the unlocking of the hand-operated drive pinion (38) is monitored prior to the starting of the motor (35).

11. A support according to any one of the preceding claims, **characterized in that** the hand-operated drive shaft (37) is non-slidably disposed on the front side of the support (10) in the outer support tube (12) and on the back side in the outer support tube (12) as well as the screw-on plate (14), and that the hand-operated drive pinion (38) permanently engages with the gear wheel (27).

## Revendications

1. Soutien réglable en hauteur pour semi-remorques ou similaires, comprenant un tube extérieur de soutien (12) monté stationnaire,
un tube intérieur de soutien (13) agencé en déplacement longitudinal dans le tube extérieur de soutien (12), et
un entraînement à broche monté dans le soutien, susceptible d'être entraîné via un étage à pignons coniques (20, 26),
dans lequel l'étage à pignons coniques comprend un arbre de sortie de transmission (21) sur lequel est disposé un engrenage (27) solidaire en rotation,
**caractérisé en ce que**
l'engrenage (27) peut être entraîné alternativement par un pignon d'entraînement motorisé (31) d'un arbre d'entraînement motorisé (30) ou par un pignon d'entraînement manuel (38) d'un arbre d'entraînement séparé (37).

2. Soutien selon la revendication 1, **caractérisé en ce que** l'engrenage (27) est disposé dans le tube extérieur de soutien (12) sur le côté opposé d'un pignon conique (26), de l'étage à pignons coniques (26), fixé sur l'arbre de sortie de transmission (21).

3. Soutien selon l'une des revendications précédentes, **caractérisé en ce que** l'arbre d'entraînement motorisé (30) et l'arbre d'entraînement manuel (37) sont agencés au-dessus de l'arbre de sortie de transmission (21).

4. Soutien selon la revendication 1 ou 2, **caractérisé en ce que** l'arbre d'entraînement motorisé (30) ou l'arbre d'entraînement manuel (37) est agencé au-dessus de l'arbre de sortie de transmission (21), et l'arbre d'entraînement manuel (37) ou l'arbre d'entraînement motorisé (30) se trouve au-dessous de l'arbre de sortie de transmission (21).

5. Soutien selon l'une des revendications précédentes, **caractérisé en ce que** l'arbre d'entraînement motorisé (30) et/ou l'arbre d'entraînement manuel (37) sont disposés dans l'intérieur du tube extérieur de soutien (12).

6. Soutien selon la revendication 5, **caractérisé en ce que** le montage de l'arbre d'entraînement motorisé (30) et de l'arbre d'entraînement manuel (37) a lieu dans un porte-paliers commun (34) qui est fixé dans le tube extérieur de soutien (12).

7. Soutien selon la revendication 5 ou 6, **caractérisé en ce que** les sièges de palier de l'arbre d'entraînement motorisé (30) et de l'arbre d'entraînement manuel (37) ont, dans la région intérieure du tube extérieur de soutien (12), un diamètre supérieur au diamètre de tête du pignon d'entraînement motorisé (31) et du pignon d'entraînement manuel (38).

8. Soutien selon l'une des revendications 5 à 7, **caractérisé en ce que** le pignon d'entraînement motorisé (31) et/ou le pignon d'entraînement manuel (38) sont d'une seule pièce avec la ou les zones de palier respectivement adjacentes, et les parties restantes de l'arbre d'entraînement motorisé (30) ou respectivement de l'arbre d'entraînement manuel (37) sont reliés à celle(s)-ci respectivement par coopération de formes.

9. Soutien selon l'une des revendications précédentes, **caractérisé en ce que** l'arbre d'entraînement manuel (37) comporte dans la région frontale un tenon de palier (41) qui sert au montage quand le pignon d'entraînement manuel (48) est en engagement avec l'engrenage (27).

10. Soutien selon l'une des revendications précédentes, **caractérisé en ce qu'**il est prévu un commutateur de fin de course (49) au moyen duquel la libération du pignon d'entraînement manuel (38) avant le démarrage du moteur (35) est surveillée via la bague de commutation/butée (48).

11. Soutien selon l'une des revendications précédentes, **caractérisé en ce que** l'arbre d'entraînement manuel (37) est monté sans possibilité de déplacement sur la face antérieure du soutien (10) dans le tube extérieur de soutien (12) et sur la face postérieure dans le tube extérieur de soutien (12) ainsi que sur la plaque de vissage (14), et le pignon d'entraînement manuel (38) est en engagement permanent avec l'engrenage (27).
